# EUROPEAN PATENT SPECIFICATION

(11) **EP 0 915 312 B1**
(45) Date of publication and mention of the grant of the patent: **18.12.2002**
(21) Application number: 98302990.1
(22) Date of filing: 17.04.1998
(51) Int. Cl.: F28C 1/14

(54) **Cooling tower**
Kühlturm
Tour de refroidissement

(30) Priority: 07.11.1997 JP 30549197
(43) Date of publication of application: 12.05.1999
(73) Proprietor: ISHIKAWAJIMA-HARIMA JUKOGYO KABUSHIKI KAISHA, Chiyoda-ku Tokyo-to (JP)
(72) Inventor: Mochizuki, Kesaaki, Inashiki-gun, Ibaraki-ken (JP); Goto, Osamu, Ushiku-shi, Ibaraki-ken (JP); Shibata, Katsutoshi, Kawaguchi-shi, Saitama-ken (JP)
(74) Representative: Jennings, Nigel Robin

(56) References cited:
- EP-A- 0 772 016
- US-A- 3 997 635

## Description

The present invention relates to a cooling tower according to the preamble of claim 1. Such a cooling tower is known from EP-A-0 772 016.

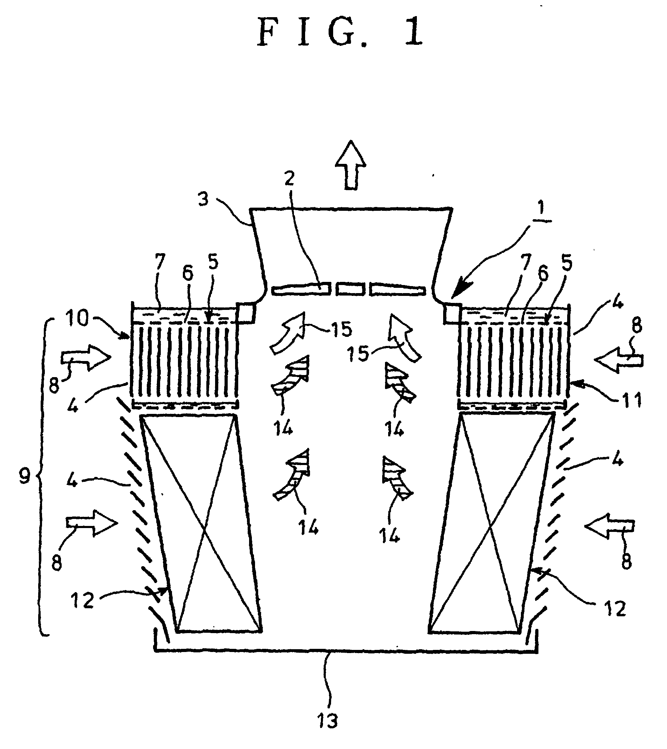

Figure 1 is a schematic vertical sectional view of a known cooling tower, which comprises a casing 1, an axial flow fan 2 at the top of the casing 1, an air outlet 3, air inlets 4 at the outer periphery of the casing 1, a hot water vessel 5 at an upper portion of the casing 1 and surrounding the outlet 3, and a heat exchanger 9 below the hot water vessel 5. In use, hot water 7 is sprayed through spray ports 6 in the lower surface of the vessel 5 and the water is then subjected to heat exchange with ambient air 8 sucked through the air inlets 4 by the fan 2. The heat exchanger 9 comprises a dry type air heater 11 in the form of finned tubes 10 immediately below the vessel 5 and fillers 12 in the form of a number of heat transfer surface members with irregular surfaces, made of sheet-like synthetic resin and arranged parallel to each other to define flow passages for the ambient air 8. The cooled water is then collected in a bottom water vessel 13.

In this cooling tower, the hot water 7 flows down through the ports 6 and tubes 10 from the vessel 5 and passes along the fillers 12 below while the ambient air 8 is sucked in through the inlets 4 by the fan 2 and is directed to flow transversely of the heater 11 and fillers 12, thereby cooling the water 7.

The hot water 7 flowing down along the fillers 12 is effectively cooled through direct heat exchange with the ambient air 8. After heat exchange with the water 7 at the fillers 12 the dry air 8 becomes wet or humid air 14 which is hot and has a moisture content of substantially 100%. If the wet air 14 were directly discharged out of the cooling tower, it would immediately condense and have the appearance of white smoke when the ambient temperature is low.

Such white smoke is liable to be intensely disliked by people living in the neighbourhood since they typically perceive such "smoke" as contaminating their environment. Moreover, there is a risk that visibility may be adversely affected by the "smoke" coming down close to the ground and staying there as fog. There is thus strong pressure to prevent the generation of such white smoke.

To this end, in the cooling tower shown in Figure 1 in which the hot water 7 flows down through the tubes 10, the ambient air 8 flowing past the outer periphery of the tubes 10 is heated in a dry manner to produce dry air 15 with an extremely low moisture content. The dry air 15 is mixed with the wet air 14 by the fan 2 to reduce the moisture content of the air discharged through the outlet 3, thereby preventing the generation of white smoke.

Such a cooling tower with a special-purpose dry type air heater 11, is very complex structurally and extremely expensive to manufacture. Due to the fact that heat exchange with the finned tubes 10 is indirect, the heat exchange efficiency cannot be particularly high and to compensate for this a high volume or capacity is required. This means that the dry type air heater 11 must be relatively large, which leads to an increase in height and thus in the overall dimensions of the cooling tower.

It is the object of the present invention to overcome the problems referred to above and thus to provide a cooling tower which is compact and is cheaper to manufacture but which is nevertheless capable of preventing "white smoke" from being generated.

These problems are solved by the cooling tower of claim 1.

Thus when there is no risk of white smoke, that is to say steam, being generated (i.e. when the ambient air temperature is high), hot water is supplied to both the hot water vessel and to the spray pipes and is sprayed into both the permanent wet passages and the wet-dry changeover passages through the spray ports and through the spray pipes, respectively. The hot water then trickles down all the surfaces of the heat transfer surface members and is effectively cooled by direct contact with the ambient air which is drawn through the passages by the fan. The hot moist air is then discharged into the atmosphere but due to the high ambient temperature no white smoke is generated.

On the other hand, at times when there is a risk of white smoke being generated (i.e. when the ambient air temperature is low), the supply of water to the spray pipes is terminated and water is sprayed only through the spray ports into the permanent wet passages. The cooling of the water then takes place in two concurrent operations, i.e. direct cooling by contact with the ambient air in the permanent wet passages and dry heating off the air flowing through the wet-dry changeover passages by virtue of thermal conduction through the heat transfer surface members defining those passages. The warm moist air produced by the direct cooling is mixed with the warm dry air produced by the dry heating process, whereby the relative humidity of the air discharged to the atmosphere is reduced and white smoke is not generated.

Thus in the cooling tower in accordance with the present invention there is no need to provide a separate special purpose dry type air heater. Furthermore, there is no need to provide special support members for the hot water vessel since it is supported by the spray pipes which will in practice be supported in turn on the main structure of the cooling tower.

It is preferred that the permanent wet passages are provided in groups of two or more such passages comprising a permanent wet region alternating with one or more wet-dry changeover passages comprising a wet-dry changeover region. It is preferred also that the spray pipes have a vertically elongate rectangular shape in transverse cross-section which facilitates the spraying of water from the spray pipes into the wet-dry changeover regions which are typically relatively narrow in comparison to the width of the permanent wet regions.

This feature has the further advantage that it permits the wet-dry changeover regions to be readily isolated from the permanent wet regions by extending the upper ends of those heat transfer surface members, which define the wet-dry changeover regions, upwards along opposite side surfaces of the spray pipes. Moreover, in conjunction with the fact that the spray pipes are used as supports for the hot water vessel, this feature increases the structural strength of the supports with respect to the load placed on them.

It is preferred that the separate water supply comprises an auxiliary hot water supply vessel, which is common to all the spray pipes and extends transversely to them and is arranged adjacent to the hot water vessel. This makes it possible to distribute the hot water which is temporarily retained in the auxiliary water vessel substantially evenly to each of the spray pipes all the way to their far end so that the water can be satisfactorily and uniformly sprayed into the wet-dry changeover regions.

Further advantages of the invention will be apparent from the following description of a preferred embodiment which is given with reference to Figures 2 to 5 of the accompanying drawings, in which:
Figure 2 is a schematic scrap front view of one embodiment of the present invention;
Figure 3 is a plan view of the hot water vessel shown in Figure 2;
Figure 4 is a view in the direction of the arrows IV-IV in Figure 3; and
Figure 5 is a view in the direction of the arrows V-V in Figure 4.

Those components which are the same as in Figure 1 are referred to by the same reference numerals.

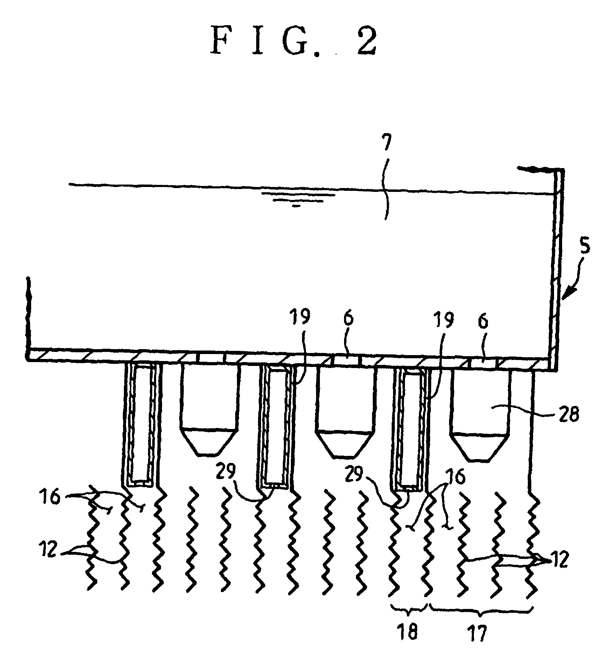

As shown in Figure 2, the cooling tower requires no special-purpose dry type air heater with finned tubes and instead has a heat exchanger, arranged beneath the hot water vessel 5, which comprises fillers 12 in the form of a number of heat transfer surface members or plates with irregular surfaces, made of sheet-like synthetic resin and arranged parallel with one another to define vertically extending flow passages 16 for ambient air 8. The flow passages 16 are divided into alternating permanent wet and wet-dry changeover regions 17 and 18, respectively, which are isolated from one another.

Each of the permanent wet regions 17 comprises three adjacent flow passages 16 and each of the wet-dry changeover regions 18 comprises a single flow passage 16. The upper ends of the fillers 12 which define the wet-dry changeover regions 18 extend upwardly along opposite side surfaces of spray pipes 19, each of which has a vertically elongate rectangular cross-section and is arranged below the lower surface of the hot water vessel 5, whereby hot water 7 from the adjacent permanent wet regions 17 may not gain access. Each spray pipe 19 extends along the entire length of the associated wet-dry region 18 and has a plurality of longitudinally spaced spray holes 29 formed in its lower surface.

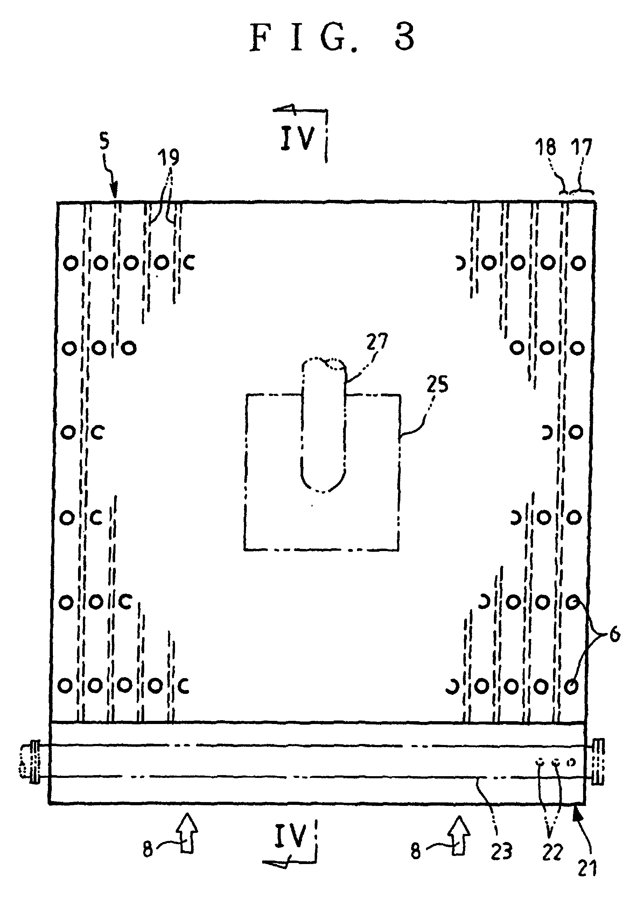

As shown in Figure 3, the spray pipes 19 are arranged on the bottom of the hot water vessel 5 in positions corresponding to respective wet-dry changeover regions 18 so that water may be sprayed into the wet-dry changeover regions 18 independently from the permanent wet regions 17. Spray ports 6 in the bottom of the hot water vessel 5 communicate only with the permanent wet regions 17.

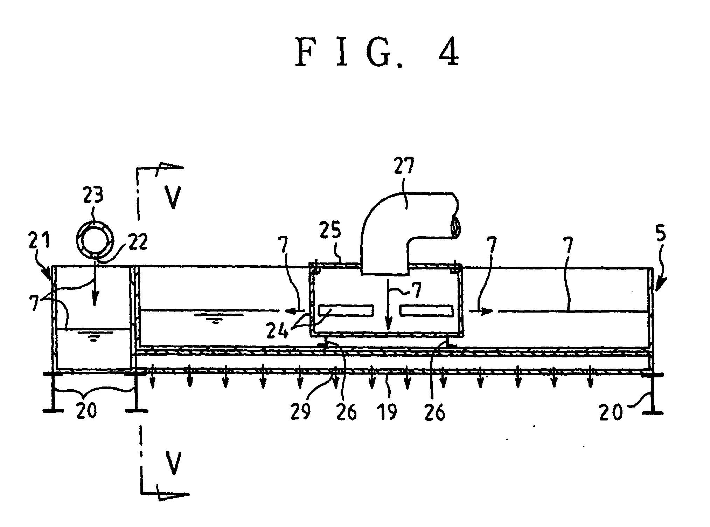

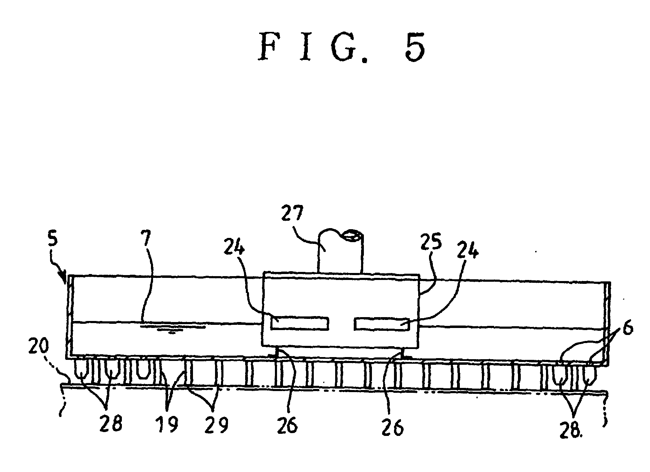

As shown in Figures 4 and 5, the hot water vessel 5 is directly placed on the spray pipes 19, the lower end of each of which is fixed at its longitudinal ends to the main structure 20 of the cooling tower.

The spray pipes 19 communicate with a common auxiliary water vessel 21 which is arranged adjacent to the hot water vessel 5 and extends transversely of the spray pipes 19. Arranged above the auxiliary water vessel 21 is a water supply header 23 which extends along the vessel 21 and has a plurality of water supply holes 22 in its bottom substantially over the whole length of the header 23. The hot water 7 supplied to the header 23 is supplied substantially evenly to a plurality of locations longitudinally spaced along the auxiliary water vessel 21.

A distribution box 25 having horizontally elongate slit-like openings 24 in all of its four vertical sides and a water supply pipe 27 at its top is installed substantially centrally of the hot water vessel 5 and spaced above its base by means of angle members 26 so as not to block the spray ports 6 in the lower surface of the vessel 5. The hot water 7 supplied through the pipe 27 to the distribution box 25 is temporarily retained in the box 25 and is then slowly and evenly distributed with reduced flow velocity and in all directions through the openings 24 on its sides.

Spray nozzles 28 are provided for the spray ports 6 on the lower surface of the hot water vessel 5. Provision of such spray nozzles 28 will facilitate satisfactory diffusion and spraying of the hot water 7 onto the fillers 12 in the permanent wet regions 17 comprising three rows of flow passages 16. These nozzles 28 may, however, be omitted with suitable adjustment of the spacing of the fillers 12, and of the number, position or diameter of the spray ports 6 or the like.

When there is no possibility of white smoke, i.e. steam, being generated (i.e. when ambient air temperature is high), the hot water 7 is introduced through the water supply pipe 27 into the distribution box 25 where it is temporarily retained and from where it flows slowly and evenly with a reduced flow velocity through the openings 24 in all directions, such that an adequate water level is maintained in the vessel 5. At the same time, hot water 7 is substantially evenly sprayed through the water supply header 23 to a plurality of longitudinally spaced locations in the auxiliary water vessel 21 such that an adequate water level is maintained in the vessel 21. This results in a substantially even distribution of the hot water 7 through the vessel 21 to each of the spray pipes 19. Hot water 7 is thus sprayed through the spray ports 6 in the lower surface of the hot water vessel 5 into the permanent wet regions 17 of the fillers 12 and is also sprayed through the spray pipes 19 into the wet-dry changeover regions 18 of the fillers 12. The hot water 7 is thus effectively cooled by the ambient air 8 over the entire area of the fillers 12 because the water 7 is sprayed to both the permanent wet and wet-dry changeover regions 17 and 18.

On the other hand, when there is a risk of generation of white smoke (i.e. when the ambient air temperature is low), the supply of hot water 7 to the spray pipes 19 is terminated and cooling of the water is divided into two different but concurrent operations, i.e. direct cooling of the hot water 7 by the ambient air 8 in the permanent wet regions 17 into which hot water 7 is sprayed and dry heating of the ambient air 8 passing through the wet-dry changeover regions 18 into which no hot water is sprayed. The warm wet air generated by the direct cooling is mixed with the warm dry air produced by the dry heating to reduce the moisture content of the discharged air thereby preventing white smoke from being generated.

Thus, there is no need of providing a special-purpose dry type air heater since some of the fillers 12 define the wet-dry changeover regions 18. Also, there is no need of providing separate support members for the hot water vessel 5 since it is supported by the spray pipes 19.

Thus the cooling tower is capable of preventing white smoke from being generated and the hot water vessel 5 and its support structure are not structurally complicated and have the same height and dimensions as those of conventional cooling towers since there is no need to provide a special-purpose dry type air heater because the fillers 12 partially define the wet-dry changeover regions 18 and the spray pipes 19, which serve as supports for the hot water vessel 5, are provided for independently spraying into the wet-dry changeover regions 18.

Thus in the cooling tower according to the invention, no partitioning of the hot water vessel 5 by, for example, partition walls is required for independent spraying of the water to the permanent wet and wet-dry changeover regions 17 and 18, respectively. Accordingly, the water supply means to a conventional cooling tower having only one large permanent wet region may be utilized in the present invention without change. The distribution box 25, which is known per se, may be used to supply the hot water 7 into the hot water vessel 5 without any difficulty and in a very satisfactory manner.

In the embodiment, the spray pipes 19 have a vertically elongate rectangular cross-section, which facilitates easy application of the spray pipes 19 to the wet-dry changeover regions 18 which are normally narrow in comparison with the permanent wet regions 17. This feature is particularly advantageous in that the wet-dry changeover regions 18 may be readily isolated from the permanent wet regions 17 by extending the upper ends of those fillers 12 which define the wet-dry changeover regions 18 upwards along opposite side surfaces of the spray pipes 19. This feature also increases the structural strength of the supports against the load placed thereon and enhances their reliability as supports.

In the embodiment, the spray pipes 19 communicate with a common auxiliary water vessel 21 which is arranged adjacent to the hot water vessel 5 and extends transversely of the spray pipes 19. This makes it possible to distribute the hot water 7 temporarily retained in the auxiliary water vessel 21 to each of the spray pipes 19 substantially evenly, so that the water 7 can be evenly and satisfactorily sprayed into the wet-dry changeover regions 18.

## Claims

1. A cooling tower including a hot water vessel (5) in whose bottom spray ports (6) are formed, the spray ports (6) communicating with passages (16) defined by heat transfer surface members (12), a fan (2) arranged to draw air in from the atmosphere through the passages (16) and then to discharge it to the atmosphere, whereby hot water (7) flowing through the spray ports (6) runs down the surfaces of the heat transfer surface members (12) and is cooled by direct contact with the air and whereby certain pairs of the heat transfer surface members (12) define permanent wet passages (17) and further pairs of heat transfer surface members (12) define wet-dry changeover passages (18) which are isolated from the permanent wet passages (17), whereby hot water may be selectively supplied to the wet-dry changeover passages (18), **characterised in that**, the spray ports (6) communicate with the permanent wet passages (17) and **in that** the wet-dry changeover passages (18) communicate with a separate supply (21) of hot water via spray pipes (19) below the hot water vessel (5), and that the hot water vessel (5) is supported by the spray pipes (19).

2. A cooling tower as claimed in Claim 1 in which the permanent wet passages are provided in groups of two or more such passages comprising a permanent wet region (17) alternating with one or more wet-dry changeover passages comprising a wet-dry changeover region (18).

3. A cooling tower as claimed in Claim 1 or 2 in which the spray pipes (19) have a vertically elongate rectangular cross-section.

4. A cooling tower as claimed in any one of Claims 1 to 3 in which the separate water supply comprises an auxiliary hot water supply vessel (21), which is common to all the spray pipes (19) and extends transversely to them and is arranged adjacent to the hot water vessel (5).

## Patentansprüche

1. Kühlturm mit einem Heißwasserkessel (5), in dessen Boden Sprühöffnungen (6) ausgebildet sind, die mit Durchlässen (16) kommunizieren, die durch Wärmeübertragungs-Flächenelemente (12) bestimmt sind, und mit einem Gebläse (2) zum Ansaugen von Luft aus der Atmosphäre durch die Durchlässe (16) hindurch und dann zum Ausgeben in die Atmosphäre, wobei durch die Sprühöffnungen (6) fließendes Heißwasser (7) an den Oberflächen der Wärmeübertragungs-Flächenelemente (12) nach unten rinnt und durch direkten Kontakt mit der Luft gekühlt wird, und wobei bestimmte Paare von Wärmeübertragungs-Flächenelementen (12) permanent feuchte Durchlässe (17) und andere Paare von Wärmeübertragungs-Flächenelementen (12) feucht-trockene Übergangsdurchlässe (18) festlegen, die von den permanent feuchten Durchlässen (17) isoliert sind, wobei Heißwasser wahlweise zu den feucht-trockenen Übergangsdurchlässen (18) geliefert werden kann,
**dadurch gekennzeichnet,**
**daß** die Sprühöffnungen (6) mit den permanent feuchten Durchlässen (17) kommunizieren, und daß die feucht-trockenen Übergangsdurchlässe (18) mit einer separaten Zufuhr (21) von Heißwasser über Sprührohre (19) kommunizieren, die unter dem Heißwasserkessel (5) vorgesehen sind, wobei der Heißwasserkessel (5) durch die Sprührohre (19) gehalten wird.

2. Kühlturm nach Anspruch 1,
wobei die permanent feuchten Durchlässe in Gruppen von zwei oder mehreren solcher Durchlässe vorgesehen sind, die jeweils einen permanent feuchten Bereich (17) bilden, der mit einem oder mehreren feucht-trockenen Übergangsdurchlässen abwechselt, die jeweils einen feucht-trockenen Übergangsbereich (18) bilden.

3. Kühlturm nach Anspruch 1 oder 2,
wobei die Sprührohre (19) einen vertikalen, länglich rechteckigen Querschnitt besitzen.

4. Kühlturm nach einem der Ansprüche 1 bis 3,
wobei die separate Wasserzufuhr einen zusätzlichen Heißwasserzufuhrkessel (21) aufweist, der allen Sprührohren (19) gemeinsam ist und der sich zu diesen quer erstreckt und der in der Nachbarschaft des Heißwasserkessels (5) angeordnet ist.

## Revendications

1. Tour de refroidissement comprenant un caisson d'eau chaude (5) dont le fond duquel des orifices de pulvérisation (6) sont formés, les orifices de pulvérisation (6) qui communiquent avec des passages (16) définis par des éléments à surface de transfert de chaleur (12), un ventilateur (2) agencé pour aspirer l'air depuis l'atmosphère par l'intermédiaire des passages (16) et pour le refouler ensuite vers l'atmosphère, grâce à quoi de l'eau chaude (7) s'écoulant au travers des orifices de pulvérisation (6) coule sur les surfaces des éléments à surface de transfert de chaleur (12) et est refroidie par contact direct avec l'air et grâce à quoi certaines paires des éléments à surface de transfert de chaleur (12) définissent des passages mouillés en permanence (17) et d'autres paires d'éléments à surface de transfert de chaleur (12) définissent des passages de permutation d'état mouillé―sec (18) qui sont isolés des passages mouillés en permanence (17), grâce à quoi l'eau chaude peut être fournie de façon sélective aux passages de permutation d'état mouillé―sec (18), **caractérisée en ce que** les orifices de pulvérisation (6) communiquent avec les passages mouillés en permanence (17) et **en ce que** les passages de permutation d'état mouillé―sec (18) communiquent avec une fourniture séparée (21) d'eau chaude par des tubes de pulvérisation (19) au-dessous du caisson d'eau chaude (5) et **en ce que** le caisson d'eau chaude (5) est supporté par les tubes de pulvérisation (19).

2. Tour de refroidissement selon la revendication 1, dans laquelle les passages mouillés en permanence sont disposés en groupes de deux tels passages ou plus comprenant une région mouillée en permanence (17) qui alterne avec un ou plusieurs passages de permutation d'état mouillé―sec qui comprend une région de permutation d'état mouillé―sec (18).

3. Tour de refroidissement selon la revendication 1 ou 2, dans laquelle les tubes de pulvérisation (19) présentent une section transversale rectangulaire allongée verticalement.

4. Tour de refroidissement selon l'une quelconque des revendications 1 à 3, dans laquelle la fourniture d'eau séparée comprend un caisson de fourniture d'eau chaude auxiliaire (21), qui est commun à tous les tubes de pulvérisation (19) et qui s'étend transversalement à ceux-ci et qui est disposé de façon adjacente au caisson d'eau chaude (5).
